# FASCICULE DE BREVET EUROPEEN

(11) **EP 2 383 183 B1**
(45) Date de publication et mention de la délivrance du brevet: **05.03.2014**
(21) Numéro de dépôt: 11002951.9
(22) Date de dépôt: 08.04.2011
(51) Int. Cl.: B64C 27/00

(54) **Dispositif pour réduire les vibrations engendrées par un rotor de sustentation d'un giravion, et moyeu d'un rotor muni d'un dispositiv**
Vorrichtung zum Reduzieren der Schwingungen, die von einem Auftriebsrotor eines Drehflügelflugzeugs erzeugt werden, und mit einer solchen Vorrichtung ausgestattete Rotornabe
Device for reducing the vibration caused by a lift rotor of a rotorcraft, and hub of a rotor provided with such a device

(30) Priorité: 30.04.2010 FR 1001852
(43) Date de publication de la demande: 02.11.2011
(73) Titulaire: EUROCOPTER, 13725 Marignane Cédex (FR)
(72) Inventeur: Girard, Vincent, 13770 Venelles (FR); Varin d'Ainvelle, Arnaud, 13290 Les Milles (FR)
(74) Mandataire: GPI & Associés

(56) Documents cités:
- EP-A1- 0 739 814
- FR-A1- 2 416 838
- FR-A1- 2 749 901
- FR-A1- 2 768 995
- US-A- 4 596 513
- US-A1- 2005 079 056

## Description

La présente invention concerne un dispositif pour réduire les vibrations engendrées par un rotor de sustentation d'un giravion, et le moyeu d'un rotor muni d'un tel dispositif.

En effet, le fonctionnement d'un rotor de sustentation d'un giravion, un rotor principal de sustentation et de propulsion d'un hélicoptère par exemple, engendre des efforts parasites au niveau de la tête de ce rotor de sustentation. Ces efforts parasites induisent alors des vibrations qui se propagent à la cellule du giravion, ces vibrations étant notamment sensibles au niveau de la cabine de pilotage du giravion.

Pour pallier à cet inconvénient, on a réalisé des dispositifs afin d'atténuer les vibrations générées, dénommés parfois résonateurs de tête de rotor.

Selon un premier type de dispositif, on utilise une masse battante et un moyen de rappel apte à repositionner la masse battante dans une position prédéterminée.

Selon le document FR 2416838, on monte sur la partie supérieure du moyeu un dispositif comportant une masse battante maintenue radialement par des moyens élastiques dans un logement solidarisé au moyeu.

De plus, cette masse est fixée à l'extrémité supérieure d'une tige. Cette tige est sensiblement disposée selon l'axe de rotation du rotor dans un évidement du mât rotor du rotor. L'extrémité inférieure de la tige est alors articulée en un point situé sur l'axe de rotation du rotor.

Ainsi, les moyens élastiques tendant à maintenir la masse battante dans une position de repos, la masse battante peut se déplacer dans un plan sensiblement parallèle à la partie supérieure du moyeu du rotor de sustentation, c'est-à-dire dans un plan sensiblement perpendiculaire à l'axe de rotation vertical du rotor. La masse battante s'oppose alors directement aux vibrations engendrées par le rotor.

Or, les efforts induisant les vibrations à réduire et générés à la tête du rotor peuvent être décrits via un torseur d'efforts, appelé parfois « torseur tête rotor » par l'homme du métier. Ce « torseur tête rotor » est alors notamment composé de trois forces résultantes suivant trois axes orthonormés et de trois moments autour des ces axes que, à savoir :
- deux axes dénommés par la suite et par commodité « premier et deuxième axes résultants » définissant un plan dénommé par la suite « premier plan résultant » parallèle à la partie supérieure du moyeu du rotor et donc sensiblement perpendiculaire à l'axe de rotation vertical du rotor, et
- un axe dénommé « troisième axe résultant » perpendiculaire audit premier plan résultant.

Le dispositif présenté par le document FR 2416838 est alors efficace pour filtrer les forces résultantes du « torseur tête rotor » selon les premier et deuxième axes résultants sensiblement parallèles au plan contenant ladite masse battante, mais est quasi inopérant pour la force résultante du « torseur tête rotor » selon le troisième axe résultant sensiblement parallèle à l'axe de rotation du rotor de sustentation et perpendiculaire au plan contenant la masse battante.

De plus, la masse battante mise en oeuvre étant constante, le premier dispositif est surtout efficace lorsque la fréquence d'excitation des vibrations à réduire est proche de la fréquence propre, de fait constante, de cette masse battante en mouvement. Le premier dispositif à masse concentrée n'est alors pas vraiment adapté à des fréquences d'excitations variables.

Le document FR 2749901 présente un dispositif comportant une masse battante principale maintenue radialement dans un logement. De plus, il est pourvu d'une masse battante de réglage apte à coulisser sur la tige fixée à la masse battante principale et articulée en un point situé sur l'axe de rotation du rotor.

En déplaçant la masse battante de réglage, il devient alors possible d'adapter le dispositif afin de lui permettre de réduire des vibrations de fréquences variables. Néanmoins, l'absence de filtration des forces résultantes du « torseur tête rotor » selon trois axes orthonormés demeure, et notamment selon le troisième axe résultant sensiblement parallèle à l'axe de rotation du rotor de sustentation, voire de propulsion.

Le document FR 2575800 présente un amortisseur de vibrations pour un moyeu de rotor d'hélicoptère muni d'une masse battante centrale suspendue dans une enveloppe externe selon trois directions par des ressorts mécaniques et pneumatiques.

Ainsi, une même masse est utilisée pour lutter contre les trois forces résultantes du « torseur tête rotor ».

Bien qu'efficace, on note que les sollicitations selon le troisième axe résultant diffèrent des sollicitations selon les premier et deuxième axes résultants. La mise au point du dispositif peut alors être délicate. De plus, la réduction de vibrations à des fréquences variables peut être complexe.

De la même manière, le document EP 0790180 prévoit de suspendre une masse battante centrale par une pluralité de ressorts, la masse battante centrale étant de plus agencée sur un limiteur de déplacement s'étendant selon un axe vertical.

Enfin, le document US 6443273 divulgue la possibilité de suspendre une masse centrale dans une enveloppe à l'aide de ressorts.

On note encore que le document EP1007406 décrit un dispositif de type masse-ressort.

Les dispositifs du premier type paraissent difficilement adaptés pour lutter contre les trois forces résultantes du « torseur tête rotor » engendrées par des vibrations de fréquences variables

Selon un second type de dispositif, on répartit des éléments pesants autour de l'axe de rotation du rotor.

Le document WO 2005/079200 présente une première variante du second type munie de deux éléments pesants coaxiaux et d'un moyen de contrôle, ce moyen de contrôle étant apte à contrôler la vitesse de rotation desdits éléments pesants et leur position angulaire relative.

Selon une deuxième variante de cette seconde solution, on utilise des pendules qui oscillent sous l'effet de la force centrifuge. Chaque pendule comporte un élément pesant relié à une articulation d'un support, ce support effectuant un mouvement rotatif autour de l'axe de rotation du rotor principal. Par exemple, le support est muni d'une pluralité de bras radiaux formant une étoile, chaque bras radial ayant une articulation reliée à un élément pesant.

Dès lors, contrairement aux dispositifs du premier type, il n'est pas nécessaire d'implémenter un moyen de rappel dédié, la force centrifuge fournissant l'effort de rappel requis.

Cette particularité confère aux dispositifs munis d'un pendule une capacité d'auto-adaptation aux variations de la fréquence des vibrations à atténuer.

En effet, une variation de la vitesse de rotation du rotor induit non seulement une variation de la fréquence des vibrations à atténuer mais de fait une variation de la force centrifuae exercée sur le pendule. Ainsi, ces dispositifs du deuxième type sont dits « auto-adaptables » ou encore « auto-réglables ».

Les pendules peuvent osciller dans un premier plan perpendiculaire à l'axe de rotation du rotor principal, ou encore dans un deuxième plan dans lequel est inscrit ledit axe de rotation du rotor principal en fonction de la nature des vibrations à atténuer.

Selon une première réalisation d'un dispositif à pendules, dénommé « résonateur pendulaire simple » par commodité, l'élément pesant effectue un mouvement circulaire autour d'un unique axe de rotation.

Les documents EP 0 739 814 A1 et FR 2435391 présentent de tels résonateurs pendulaires simples.

Selon une deuxième réalisation dénommée « résonateur pendulaire bifilaire » par l'homme du métier, chaque élément pesant effectue une translation circulaire. On rappelle qu'une translation circulaire d'un corps est un mouvement de ce corps dans un plan, deux points distincts dudit corps décrivant deux trajectoires circulaires de même rayon mais de centres différents.

Par rapport à un résonateur pendulaire simple, le résonateur pendulaire bifilaire est à même de filtrer de plus hautes fréquences.

Le document FR 2018491 présente une telle deuxième réalisation.

Chaque élément pesant bifilaire comporte un cavalier de jonction dans lequel est engagée une branche d'un support en étoile. Le cavalier de jonction est alors pourvu de deux premières ouvertures de section circulaire qui coopèrent avec deux secondes ouvertures de section circulaire d'un support via deux rouleaux.

Le document FR 2768995 présente une troisième réalisation d'un dispositif du deuxième type dénommé « résonateur pendulaire accéléré » par commodité. Selon ce document, l'élément pesant est une masselotte reliée par un bras de liaison à une branche du support, le support étant non pas solidarisé au moyeu du rotor mais à un organe menant, tournant à une vitesse de rotation supérieure à la vitesse de rotation du rotor.

Indépendamment de la réalisation, les dispositifs mettant en oeuvre des pendules ne paraissent pas suffisant pour contrer les forces résultantes du « torseur tête rotor » selon trois axes orthonormés, plus particulièrement la force résultante selon le troisième axe résultant sensiblement parallèle à l'axe de rotation du rotor de sustentation.

La présente invention a alors pour objet de proposer un dispositif pour réduire les vibrations engendrées par un rotor de sustentation d'un giravion, efficace pour contrer les forces résultantes du « torseur tête rotor » selon ses trois axes orthonormés, tout en permettant une adaptation à des fréquences variables.

Selon l'invention, un dispositif pour réduire les vibrations d'un rotor principal de giravion pourvu d'un moyeu et d'une pluralité de pales, le dispositif ayant un support ainsi qu'au moins un élément pesant, est remarquable en ce que l'élément pesant étant fixé au support par un moyen de liaison, l'élément pesant est lié au moyen de liaison par un moyen de guidage en translation circulaire de l'élément pesant dans un plan de filtration mobile perpendiculaire à un axe en élévation du dispositif, le moyen de liaison comportant un moyen élastique de rappel pour permettre le déplacement en élévation du plan de filtration en maintenant le plan de filtration perpendiculaire à l'axe en élévation sous l'effet des vibrations.

Dès lors, le dispositif peut comporter une pluralité d'éléments pesants répartis radialement autour de l'axe en élévation, chaque élément pesant étant articulé au moyen de liaison par un moyen de guidage. On comprend que l'on entend par le déplacement de l'élément pesant dans un plan de filtration le déplacement du centre de gravité de cet élément pesant dans ledit plan de filtration.

Ainsi, lorsque le dispositif est agencé sur le moyeu d'un rotor de giravion, lors de son déplacement dans le plan de fixation, chaque élément pesant filtre les forces résultantes du « torseur tête rotor » selon les premier et deuxième axes résultants.

De plus, lors de son déplacement dans le plan de fixation chaque élément pesant filtre les forces résultantes du « torseur tête rotor » selon le troisième axe résultant. Il est à noter que ce mouvement en élévation de l'élément pesant est réalisé en maintenant le plan de filtration perpendiculaire à l'axe en élévation. Par suite, on peut découpler totalement la filtration des forces selon le premier plan résultant et selon le troisième axe résultant.

Ainsi, le découplage n'est pas obtenu en utilisant un élément pesant muni de deux organes se déplaçant indifféremment l'un de l'autre dans des directions distinctes, l'invention utilisant un élément pesant dont tous les organes se déplacent conjointement.

Le réglage de ce dispositif est alors relativement aisé, le dispositif selon l'invention répondant alors au problème posé.

L'invention peut comporter une ou plusieurs des caractéristiques additionnelles qui suivent.

Ainsi, le moyen élastique s'étendant d'une première zone extrémale vers une deuxième zone extrémale, la première zone extrémale est fixée au support et la deuxième zone extrémale est fixée au moyen de guidage.

Par ailleurs, le moyen de guidage peut comporter une première bielle et une deuxième bielle.

La première bielle peut être fixée au moyen de liaison par un premier organe de liaison primaire autorisant une rotation de la première bielle autour d'un premier axe de rotation primaire, la première bielle étant fixée à l'élément pesant par un premier organe de liaison secondaire autorisant une rotation de la première bielle autour d'un premier axe de rotation secondaire, la deuxième bielle étant fixée au moyen de liaison par un deuxième organe de liaison primaire autorisant une rotation de la deuxième bielle autour d'un deuxième axe de rotation primaire, la deuxième bielle étant fixée à l'élément pesant par un deuxième organe de liaison secondaire autorisant une rotation de la deuxième bielle autour d'un deuxième axe de rotation secondaire, les premier et deuxième axes de rotation primaires et les premier et deuxième axes de rotation secondaires étant parallèles entre eux.

Le moyen de guidage met donc en oeuvre deux bielles contrairement aux dispositifs décrits par l'état de la technique utilisant un cavalier ou équivalent et deux rouleaux. Le moyen de guidage garantit ainsi le positionnement de l'élément pesant dans le plan de filtration. De plus, ce moyen de guidage n'est pas sujet à des risques de grippage, ce qui facilite la maintenance du dispositif.

Par exemple, au moins un organe de liaison primaire comporte un axe de fixation primaire coopérant avec un organe rotatif primaire.

De plus, les premier et deuxième axes primaires et les premier et deuxième axes secondaires peuvent être parallèles entre eux, la première distance séparant le premier axe primaire du premier axe secondaire étant égale à la deuxième distance séparant le deuxième axe primaire et le deuxième axe secondaire.

Ainsi, un premier organe de liaison primaire peut comporter un premier axe de fixation primaire coopérant avec un premier organe rotatif primaire, au moins un moyen de roulement à billes ou à rouleaux par exemple. De même, le deuxième organe de liaison primaire peut comporter un deuxième axe de fixation primaire coopérant avec un deuxième organe rotatif primaire, au moins un moyen de roulement à billes ou à rouleaux par exemple.

De plus, chaque axe de fixation primaire peut indifféremment soit être fixé à la bielle associée et relié au moyen élastique par au moins un organe rotatif primaire, soit être fixé au moyen élastique et relié à la bielle associée par au moins un organe rotatif primaire.

En outre, au moins un organe de liaison secondaire comporte un axe de fixation secondaire coopérant avec un organe rotatif secondaire.

Ainsi, le premier organe de liaison secondaire peut comporter un premier axe de fixation secondaire coopérant avec un premier organe rotatif secondaire, au moins un moyen de roulement à billes ou à rouleaux par exemple. De même, le deuxième organe de liaison secondaire peut comporter un deuxième axe de fixation secondaire coopérant avec un deuxième organe rotatif secondaire, au moins un moyen de roulement à billes ou à rouleaux par exemple

De plus, chaque axe de fixation secondaire peut indifféremment soit être fixé à la bielle associée et relié à un élément pesant par au moins un organe rotatif secondaire, soit être fixé à l'élément pesant et relié à la bielle associée par au moins un organe rotatif secondaire.

Par ailleurs, l'élément pesant peut comporter une masse inférieure et une masse supérieure disposées de part et d'autre du moyen de guidage, la masse inférieure et la masse supérieure pouvant accueillir chacune des masses de réglage.

La masse inférieure et la masse supérieure d'un élément pesant sont solidaires l'une de l'autre afin de se déplacer conjointement, en étant des parties constitutives d'un élément pesant monobloc de type cavalier par exemple ou en étant liées par les premier et deuxième organes de liaison secondaire par exemple.

Cette caractéristique permet de conférer au dispositif une capacité de réglage optimisée.

Pour réduire voire supprimer les efforts selon l'axe en élévation, à savoir selon le troisième axe résultant pour une application sur un rotor, il suffit d'augmenter ou de réduire le poids des masses inférieure et supérieure d'une même quantité. Dès lors, on ne modifie pas le centre de gravité de l'élément pesant et son mouvement dans le plan de filtration.

Pour réduire voire supprimer les efforts selon le plan de filtration, à savoir selon le premier plan résultant pour une application sur un rotor, il suffit de déplacer le centre de gravité des masses inférieure et supérieure sans modifier leur poids. Dès lors, on modifie la position du centre de gravité de l'élément pesant en le maintenant dans un plan donné pour ne pas influer sur la filtration des efforts selon l'axe en élévation.

Selon un premier mode de réalisation préférée, le moyen élastique peut comporter deux lames flexibles, ledit moyen de guidage étant disposé entre les lames flexibles. L'élément pesant effectue alors une translation circulaire en élévation

Selon un deuxième mode de réalisation, le moyen élastique comporte un moyen de fixation et un organe élastique, un ressort ou un bloc ayant un matériau élastique faisant partie du groupe des élastomères par exemple. L'organe élastique est fixé au support et au moyen de fixation en s'étendant en élévation selon l'axe en élévation, le moyen de guidage étant fixé au moyen de fixation.

Enfin, outre un dispositif pour réduire les vibrations d'un rotor principal, l'invention a pour objet un rotor muni d'un moyeu comportant un tel dispositif selon l'invention.

L'invention et ses avantages apparaîtront avec plus de détails dans le cadre de la description qui suit avec des exemples de réalisation donnés à titre illustratif en référence aux figures annexées qui représentent :
- la figure 1, une vue tridimensionnelle d'un rotor selon l'invention,
- la figure 2, une coupe d'un dispositif selon un premier mode de réalisation,
- la figure 3, une vue de dessous d'un dispositif selon un premier mode de réalisation, et
- la figure 4, une coupe schématique d'un dispositif selon un deuxième mode de réalisation.

Les éléments présents dans plusieurs figures distinctes sont affectés d'une seule et même référence.

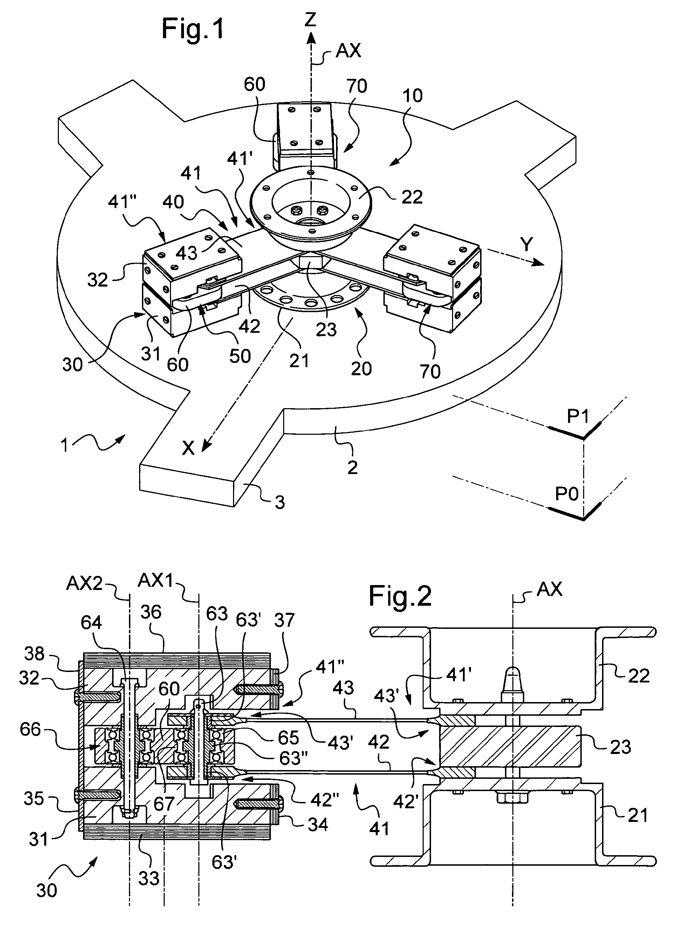

La figure 1 présente un rotor 1 muni d'un moyeu 2, ce moyeu 2 ayant par exemple une pluralité de bras pour fixer des pales non représentées par commodité.

Ce rotor 1 comporte un dispositif 10 pour filtrer les forces résultantes du « torseur tête rotor » selon les premier et deuxième axes résultants X, Y contenus dans le premier plan résultant P0 du moyeu et selon le troisième axe résultant Z confondu à l'axe de rotation AX du rotor 1. Ce rotor 1 est par exemple une partie d'une voilure tournante d'un giravion, tel que le rotor principal de sustentation et de propulsion d'un hélicoptère.

Ce dispositif 10 est équipé d'un support 20 fixé au moyeu 2 par des moyens usuels.

Ce support 20 supporte alors une pluralité d'éléments pesants 30, chaque élément pesant 30 étant fixé au support 20 par un moyen de liaison 40 coopérant avec un moyen de guidage 50. Plus précisément, chaque élément pesant 30 est articulé à un moyen de guidage 50, ce moyen de guidage 50 étant articulé à un moyen de liaison 40 fixé au support 20.

On note que le support 20 comporte au moins un organe de support inférieur 21 fixé au moyeu 2. De plus, ce support 20 peut comprendre un organe de support supérieur 22 apte à porter un carénage extérieur pour minimiser les effets aérodynamiques du dispositif, ce carénage n'étant pas représenté pour alléger la figure 1.

Par ailleurs, le moyen de guidage 50 est un moyen pour guider l'élément pesant correspondant selon un mouvement de translation circulaire dans un plan de filtration P1, parallèle au premier plan résultant P0. Dès lors, le plan de filtration P1 est perpendiculaire à un axe en élévation AX du dispositif confondu avec l'axe de rotation du rotor. Par suite, la référence « AX » désigne ledit axe de rotation et ledit axe en élévation.

Lorsque le moyeu est entraîné en rotation, chaque élément pesant 30 oscille alors de part et d'autre d'une position au repos dans le plan de filtration P1 en effectuant une translation circulaire guidée par le moyen de guidage 50. Il en résulte une filtration des composantes dynamiques des efforts du « torseur tête rotor » dans le premier plan résultant.

Par conséquent, le moyen de guidage 50 peut être pourvu d'une première bielle 60 et d'une deuxième bielle 70, éventuellement identiques, chaque bielle 60, 70 étant fixée à la fois à l'élément pesant et au moyen de liaison 40.

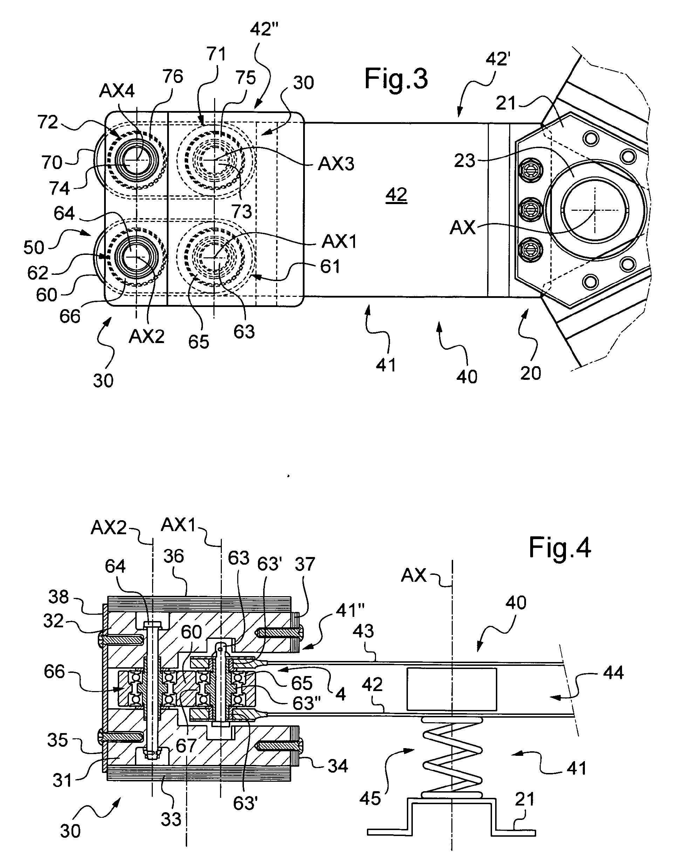

En référence aux figures 2 et 3, le moyen de guidage comprend un premier organe de liaison primaire 61 liant la première bielle 60 au moyen de liaison 40, ce premier organe de liaison primaire 61 autorisant une rotation de la première bielle par rapport au moyen de liaison 40 autour d'un premier axe de rotation primaire AX1. Par exemple, le premier organe de liaison primaire 61 comprend un premier axe de fixation primaire 63 fixé au moyen de liaison 40 qui coopère avec un premier organe rotatif primaire 65 solidaire de la première bielle, tel qu'un boulon coopérant avec au moins un roulement à billes ou à rouleaux. Le premier axe de fixation primaire 63 traverse alors le premier organe rotatif primaire 65.

La figure 2 présente une réalisation mettant en oeuvre un boulon 63 fixé au moyen de liaison, ce boulon 63 coopérant avec deux roulements à billes via deux paliers 63' et une douille 63" munie d'un épaulement. Chaque roulement à billes est alors coincé entre un palier et ledit épaulement ainsi que contre un anneau de positionnement 67 de la première bielle.

De plus, le moyen de guidage comprend un premier organe de liaison secondaire 62 liant la première bielle 60 à l'élément pesant 30, ce premier organe de liaison secondaire 62 autorisant une rotation de la première bielle par rapport à l'élément pesant 30 autour d'un premier axe de rotation secondaire AX2. Par exemple, le premier organe de liaison secondaire 62 comprend un premier axe de fixation secondaire 64 fixé à l'élément pesant 30 qui coopère avec un premier organe rotatif secondaire 66 solidaire de la première bielle, tel qu'un boulon coopérant avec au moins un roulement à billes ou à rouleaux. Le premier axe de fixation secondaire 64 traverse alors le premier organe rotatif secondaire 66.

De même, le moyen de guidage comprend un deuxième organe de liaison primaire 71 liant la deuxième bielle 70 au moyen de liaison 40, ce deuxième organe de liaison primaire 71 autorisant une rotation de la deuxième bielle par rapport au moyen de liaison 40 autour d'un deuxième axe de rotation primaire AX3. Par exemple, le deuxième organe de liaison primaire 71 comprend un deuxième axe de fixation primaire 73 fixé au moyen de liaison 40 qui coopère avec un deuxième organe rotatif primaire 75 solidaire de la deuxième bielle, tel qu'un boulon coopérant avec au moins un roulement à billes ou à rouleaux. Le deuxième axe de fixation primaire 73 traverse alors le deuxième organe rotatif primaire 75.

De plus, le moyen de guidage comprend un deuxième organe de liaison secondaire 72 liant la deuxième bielle 70 à l'élément pesant 30, ce deuxième organe de liaison secondaire 72 autorisant une rotation de la deuxième bielle par rapport à l'élément pesant 30 autour d'un deuxième axe de rotation secondaire AX4. Par exemple, le deuxième organe de liaison secondaire 72 comprend un deuxième axe de fixation secondaire 74 fixé à l'élément pesant 30 qui coopère avec un deuxième organe rotatif secondaire 76 solidaire de la deuxième bielle, tel qu'un boulon coopérant avec au moins un roulement à billes ou à rouleaux. Le deuxième axe de fixation secondaire 74 traverse alors le deuxième organe rotatif secondaire 76.

Les premier et deuxième axes primaires AX1, AX2 et les premier et deuxième axes secondaires AX3, AX4 sont parallèles entre eux. De plus la première distance séparant le premier axe primaire AX1 du premier axe secondaire AX3 est égale à la deuxième distance séparant le deuxième axe primaire AX2 et le deuxième axe secondaire AX4.

On note que l'invention permet d'éviter un mouvement de l'élément pesant selon l'axe en élévation indépendamment du moyen de liaison, contrairement aux dispositifs utilisant des cavaliers et des rouleaux par exemple.

En outre, le moyen de liaison 40 d'un élément pesant donné est muni d'un moyen élastique 41 de rappel ayant pour but d'autoriser un déplacement en élévation de l'élément pesant donné en maintenant le plan de filtration P1 perpendiculaire à l'axe en élévation AX. Lorsque le moyeu est entraîné en rotation, chaque élément pesant 30 oscille selon une direction en élévation en se rapprochant ou en s'éloignant du moyeu 2 sans modification de l'angle séparant le plan de filtration de l'axe en élévation. Il en résulte une filtration des efforts du « torseur tête rotor » selon le troisième axe résultant découplée de la filtration des efforts selon les premier et deuxième axes résultants.

Selon un premier mode de réalisation présenté sur les figures 1 à 3, le moyen élastique s'étend d'une première zone extrémale 41' vers une deuxième zone extrémale 41", la première zone extrémale 41' étant fixée au support 20 et la deuxième zone extrémale 41" étant fixée au moyen de guidage 50.

Plus précisément, en référence à la figure 2, le moyen élastique comprend une première et une deuxième lames flexibles 42, 43 s'étendant chacune dans un plan perpendiculaire à l'axe en élévation.

Le support 20 comprend alors une cale 23 interposée entre la première zone extrémale 42', 43' respectivement des première et deuxième lames flexibles 42, 43. Ainsi, la première zone extrémale 42' de la première lame flexible 42 est disposée entre l'organe de support inférieur 21 et la cale 23, alors que la première zone extrémale 43' de la deuxième lame flexible 43 est disposée entre l'organe de support supérieur 22 et la cale 23.

La première bielle 60 et la deuxième bielle 70 sont par suite agencées entre les deuxièmes zones extrémales 42", 43" respectivement des première et deuxième lames flexibles.

Un tel moyen élastique induit un déplacement en élévation de l'élément pesant 30 selon un mouvement de translation circulaire. Dès lors, le plan de filtration dans lequel évolue l'élément pesant 30 reste en permanence perpendiculaire à l'axe en élévation AX.

En référence à la figure 4, selon un deuxième mode de réalisation, le moyen de liaison 40 peut comporter un moyen de fixation 44 et un organe élastique 45 de type ressort ou bloc d'élastomère par exemple.

L'organe élastique 45 est ainsi agencé selon l'axe en élévation AX en étant fixé au support 20. Le moyen de fixation 44 est alors fixé à l'organe élastique 45 et au moyen de guidage 50.

Par exemple, le moyen de fixation 44 comporte une plaque ou deux plaques séparées par une cale conformément à la variante schématisée sur la figure 4.

Indépendamment du mode de réalisation, l'élément pesant peut comporter une masse inférieure 31 et une masse supérieure 32 disposées de part et d'autre du moyen de guidage. Ces masse inférieure 31 et supérieure 32 peuvent être solidaires l'une de l'autre ou encore faire partie d'une masse monobloc en forme de cavalier par exemple.

De plus, l'élément pesant peut être muni de masses de réglage telles que des masses de réglage inférieures 33 solidaires de la masse inférieure 31, des première masses de réglages avant 34 solidaires de la masse inférieure 31 et en regard du support 20, des première masses de réglage arrière 35 solidaires de la masse inférieure 31 et opposées au support 20, des masses de réglage supérieures 36 solidaires de la masse supérieure 32, des deuxièmes masses de réglage avant 37 solidaires de la masse supérieure 32 et en regard du support 20, des deuxièmes masses de réglage arrière 38 solidaires de la masse supérieure 32 et opposées au support 20.

Pour régler le dispositif et afin de filtrer des efforts selon les premier et deuxième axes résultants, on modifie la position du centre de gravité de l'élément pesant à iso-masse. Par exemple, on déplace une masse de réglage avant vers l'arrière pour la transformer en masse de réglage arrière.

A l'inverse, pour régler le dispositif afin de filtrer des efforts selon le troisième axe résultant, on modifie la masse de l'élément pesant sans modifier la position du centre de gravité de cet élément pesant. Par exemple, on augmente ou on réduit le poids des masses de réglage inférieures 33 et supérieures 36 de la même quantité.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, on comprend qu'il est possible d'utiliser un élément pesant comportant uniquement la masse supérieure ou la masse inférieure.

## Revendications

1. Dispositif (10) pour réduire les vibrations d'un rotor (1) principal de giravion pourvu d'un moyeu (2) et d'une pluralité de pales, ledit dispositif ayant un support (20) ainsi qu'au moins un élément pesant (30),
**caractérisé en ce que**, ledit élément pesant (30) étant fixé audit support (20) par un moyen de liaison (40), ledit élément pesant (30) est lié audit moyen de liaison (40) par un moyen de guidage (50) en translation circulaire dudit élément pesant (30) dans un plan de filtration (P1) mobile perpendiculaire à un axe en élévation (AX) dudit dispositif (10), ledit moyen de liaison (40) comportant un moyen élastique (41) de rappel pour permettre le déplacement en élévation dudit plan de filtration (P1) en maintenant le plan de filtration (P1) perpendiculaire audit axe en élévation (AX) sous l'effet desdites vibrations.

2. Dispositif selon la revendication 1,
**caractérisé en ce que** ledit moyen élastique (41) s'étendant d'une première zone extrémale (41') vers une deuxième zone extrémale (41"), ladite première zone extrémale (41') est fixée audit support (20) et ladite deuxième zone extrémale (41") est fixée audit moyen de guidage (50).

3. Dispositif selon l'une quelconque des revendications 1 à 2,
**caractérisé en ce que** ledit moyen de guidage (50) comporte une première bielle (60) et une deuxième bielle (70)

4. Dispositif selon la revendication 3,
**caractérisé en ce que** ladite première bielle (60) est fixée audit moyen de liaison (40) par un premier organe de liaison primaire (61) autorisant une rotation de ladite première bielle (60) autour d'un premier axe de rotation primaire (AX1), ladite première bielle (60) étant fixée audit élément pesant (30) par un premier organe de liaison secondaire (62) autorisant une rotation de ladite première bielle (60) autour d'un premier axe de rotation secondaire (AX2), ladite deuxième bielle (70) étant fixée audit moyen de liaison (40) par un deuxième organe de liaison primaire (71) autorisant une rotation de ladite deuxième bielle (70) autour d'un deuxième axe de rotation primaire (AX3), ladite deuxième bielle (70) étant fixée audit élément pesant (30) par un deuxième organe de liaison secondaire (72) autorisant une rotation de ladite deuxième bielle (70) autour d'un deuxième axe de rotation secondaire (AX4), lesdits premier et deuxième axes de rotation primaires (AX1, AX2) et lesdits premier et deuxième axes de rotation secondaires (AX3, AX4) étant parallèles entre eux.

5. Dispositif selon la revendication 4,
**caractérisé en ce qu'**au moins un organe de liaison primaire (61, 62) comporte un axe de fixation primaire (63, 64) coopérant avec un organe rotatif primaire (65, 66).

6. Dispositif selon la revendication 4,
**caractérisé en ce que** les premier et deuxième axes primaires (AX1, AX2) et les premier et deuxième axes secondaires (AX3, AX4) sont parallèles entre eux, la première distance séparant le premier axe primaire (AX1) du premier axe secondaire (AX3) est égale à la deuxième distance séparant le deuxième axe primaire (AX2) et le deuxième axe secondaire (AX4).

7. Dispositif selon l'une quelconque des revendications 4 à 6, **caractérisé en ce qu'**au moins un organe de liaison secondaire (71, 72) comporte un axe de fixation secondaire (73, 74) coopérant avec un organe rotatif secondaire (75, 76).

8. Dispositif selon l'une quelconque des revendications 1 à 7,
**caractérisé en ce que** ledit élément pesant (30) comporte une masse inférieure (31) et une masse supérieure (32) disposées de part et d'autre dudit moyen de guidage (50), la masse inférieure (31) et la masse supérieure (33) pouvant accueillir chacune des masses de réglage (33, 34, 35, 36, 37, 38).

9. Dispositif selon l'une quelconque des revendications 1 à 8,
**caractérisé en ce que** ledit moyen élastique (41) comporte deux lames flexibles (42, 43), ledit moyen de guidage (50) étant disposé entre lesdites lames flexibles (42, 43).

10. Dispositif selon l'une quelconque des revendications 1 à 8,
**caractérisé en ce que** ledit moyen élastique (41) comporte un moyen de fixation (44) et un organe élastique (45), ledit organe élastique (45) étant fixé audit support (20) et audit moyen de fixation (44) en s'étendant en élévation selon ledit axe en élévation (AX), ledit moyen de guidage (50) étant fixé audit moyen de fixation (44).

11. Rotor (1) muni d'un moyeu (2),
**caractérisé en ce qu'**il comporte un dispositif (10) selon l'une quelconque des revendications 1 à 10.

## Patentansprüche

1. Vorrichtung (10) zum Reduzieren der Schwingungen, die von einem Hauptrotor (1) eines Drehflügelflugzeugs erzeugt werden, mit einer Nabe (2) und einer Mehrzahl von Rotorblättern, wobei die Vorrichtung einen Träger (20) und mindestens ein Gewichtselement (30) aufweist,
**dadurch gekennzeichnet, dass** das Gewichtselement (30) am Träger (20) über ein Verbindungsmittel (40) befestigt ist, wobei das Gewichtselement (30) mit dem Verbindungsmittel (40) verbunden ist über ein rundes Translationsführungsmittel (50) des Gewichtselements (30) in einer beweglichen Filterebene (P1), die senkrecht zu einer vertikalen Achse (AX) der Vorrichtung (10) verläuft, wobei das Verbindungsmittel (40) ein elastisches Rückholmittel (41) aufweist, um eine Hebebewegung der Filterebene (P1) zu ermöglichen unter Beibehaltung der senkrechten Ausrichtung der Filterebene (P1) gegenüber der vertikalen Achse (AX) unter Einwirkung der Schwingungen.

2. Vorrichtung nach Anspruch 1,
**dadurch gekennzeichnet, dass** die elastischen Mittel (41) sich ausgehend von einem ersten Endbereich (41') zu einem zweiten Endbereich (41") erstrecken, wobei der erste Endbereich (41') auf dem Träger (20) festgelegt ist, und der zweite Endbereich (41") auf dem Führungsmittel (50) befestigt ist.

3. Vorrichtung nach einem der Ansprüche 1 bis 2,
**dadurch gekennzeichnet, dass** das Führungsmittel (50) eine erste Pleuelstange (60) und eine zweite Pleuelstange (70) aufweist.

4. Vorrichtung nach Anspruch 3,
**dadurch gekennzeichnet, dass** die erste Pleuelstange (60) an dem Verbindungsmittel (40) über ein erstes primäres Verbindungsorgan (61) befestigt ist, welches eine Drehung der ersten Pleuelstange (60) um eine erste primäre Drehachse (AX1) erlaubt, wobei die erste Pleuelstange (60) am Gewichtselement (30) über ein erstes sekundäres Verbindungsorgan (62) befestigt ist, welches eine Drehung der ersten Pleuelstange (60) um eine erste sekundäre Drehachse (AX2) erlaubt, wobei die zweite Pleuelstange (70) an dem Verbindungsmittel (40) über ein zweites primäres Verbindungsorgan (71) befestigt ist, welches eine Drehung der zweiten Pleuelstange (70) um eine zweite primäre Drehachse (AX3) erlaubt, wobei die zweite Pleuelstange (70) an dem Gewichtselement (30) über ein zweites sekundäres Verbindungsorgan (72) befestigt ist, welches eine Drehung der zweiten Pleuelstange (70) um eine zweite sekundäre Drehachse (AX4) erlaubt, wobei die ersten und zweiten primären Drehachsen (AX1, AX2) und die ersten und zweiten sekundären Drehachsen (AX3, AX4) parallel zueinander sind.

5. Vorrichtung nach Anspruch 4,
**dadurch gekennzeichnet, dass** mindestens ein primäres Verbindungsorgan (61, 62) eine primäre Befestigungsachse (63, 64) aufweist, die mit einem primären Drehorgan (65, 66) zusammenwirkt.

6. Vorrichtung nach Anspruch 4,
**dadurch gekennzeichnet, dass** die ersten und zweiten primären Achsen (AX1, AX2) und die ersten und zweiten sekundären Achsen (AX3, AX4) parallel zueinander sind, wobei der erste Abstand, der die erste primäre Achse (AX1) von der ersten sekundären Achse (AX3) trennt, gleich dem zweiten Abstand ist, der die zweite primäre Achse (AX2) von der zweiten sekundären Achse (AX4) trennt.

7. Vorrichtung nach einem der Ansprüche 4 bis 6,
**dadurch gekennzeichnet, dass** mindestens ein sekundäres Verbindungsorgan (71, 72) eine sekundäre Befestigungsachse (73, 74) aufweist, die mit einem sekundären Drehorgan (75, 76) zusammenwirkt.

8. Vorrichtung nach einem der Ansprüche 1 bis 7,
**dadurch gekennzeichnet, dass** das Gewichtselement (30) einen unteren Körper (31) und einen oberen Körper (32) aufweist, die zu beiden Seiten des Führungsmittels (50) angeordnet sind, wobei der untere Körper (31) und der obere Körper (33) jeweils Regelungskörper (33, 34, 35, 36, 37, 38) aufnehmen können.

9. Vorrichtung nach einem der Ansprüche 1 bis 8,
**dadurch gekennzeichnet, dass** das elastische Mittel (41) zwei flexible Blätter (42, 43) aufweist, wobei das Führungsmittel (50) zwischen den flexiblen Blättern (42, 43) angeordnet ist.

10. Vorrichtung nach einem der Ansprüche 1 bis 8,
**dadurch gekennzeichnet, dass** das elastische Mittel (41) ein Befestigungsmittel (44) und ein elastisches Organ (45) aufweist, wobei das elastische Organ (45) an dem Träger (20) und an dem Befestigungsmittel (44) befestigt ist, indem es sich vertikal entlang der vertikalen Achse (AX) erstreckt, wobei das Führungsmittel (50) an dem Befestigungsmittel (44) befestigt ist.

11. Rotor (1) mit einer Nabe (2),
**dadurch gekennzeichnet, dass** er eine Vorrichtung (10) nach einem der Ansprüche 1 bis 10 aufweist.

## Claims

1. Device (10) for reducing the vibrations of a rotorcraft main rotor (1) provided with a hub (2) and a plurality of blades, said device having a support (20) together with at least one weight element (30),
**characterised in that** said weight element (30) is fastened to said support (20) by a connection means (40), and said weight element (30) is connected to said connection means (40) by a guide means (50) for guiding said weight element (30) in circular translation in a filter plane (P1) movable perpendicularly to an elevation axis (AX) of said device (10), said connection means (40) comprising a flexible return means (41) for allowing said filter plane (P1) to move in elevation while keeping the filter plane (P1) perpendicular to said elevation axis (AX) under the effect of said vibrations.

2. Device according to claim 1,
**characterised in that** said flexible means (41) extends from a first end zone (41') towards a second end zone (41"), and said first end zone (41') is fastened to said support (20) and said second end zone (41") is fastened to said guide means (50).

3. Device according to any one of claims 1 to 2,
**characterised in that** said guide means (50) comprises a first rod (60) and a second rod (70).

4. Device according to claim 3,
**characterised in that** said first rod (60) is fastened to said connection means (40) by a first primary connection member (61) allowing said first rod (60) to rotate about a first primary axis of rotation (AX1), said first rod (60) being fastened to said weight element (30) by a first secondary connection member (62) allowing said first rod (60) to rotate about a first secondary axis of rotation (AX2), said second rod (70) being fastened to said connection means (40) by a second primary connection member (71) allowing said second rod (70) to rotate about a second primary axis of rotation (AX3), said second rod (70) being fastened to said weight element (30) by a second secondary connection member (72) allowing said second rod (70) to rotate about a second secondary axis of rotation (AX4), said first and second primary axes of rotation (AX1, AX2) and said first and second secondary axes of rotation (AX3, AX4) being mutually parallel.

5. Device according to claim 4,
**characterised in that** at least one primary connection member (61, 62) comprises a primary fastening pin (63, 64) co-operating with a primary rotary member (65, 66).

6. Device according to claim 4,
**characterised in that** the first and second primary axes (AX1, AX2) and the first and second secondary axes (AX3, AX4) are mutually parallel, and the first distance between the first primary axis (AX1) and the first secondary axis (AX3) is equal to the second distance between the second primary axis (AX2) and the second secondary axis (AX4).

7. Device according to any one of claims 4 to 6,
**characterised in that** at least one secondary connection member (71, 72) comprises a secondary fastening pin (73, 74) co-operating with a secondary rotary member (75, 76).

8. Device according to any one of claims 1 to 7,
**characterised in that** said weight element (30) comprises a bottom mass (31) and a top mass (32) which are located on either side of said guide means (50), the bottom mass (31) and the top mass (33) each being capable of receiving adjusting masses (33, 34, 35, 36, 37, 38).

9. Device according to any one of claims 1 to 8,
**characterised in that** said flexible means (41) comprises two flexible blades (42, 43), said guide means (50) being located between said flexible blades (42, 43).

10. Device according to any one of claims 1 to 8, **characterised in that** said flexible means (41) comprises a fastening means (44) and a flexible member (45), said flexible member (45) being fastened to said support (20) and to said fastening means (44), extending in elevation along said elevation axis (AX), said guide means (50) being fastened to said fastening means (44).

11. Rotor (1) provided with a hub (2),
**characterised in that** it comprises a device (10) according to any one of claims 1 to 10.
